# EUROPÄISCHE PATENTANMELDUNG

(11) **EP 1 901 230 A1**
(43) Veröffentlichungstag der Anmeldung: **19.03.2008**
(21) Anmeldenummer: 06120578.7
(22) Anmeldetag: 13.09.2006
(51) Int. Cl.: G06T 7/00, G01N 21/89

(54) **Verfahren zur automatischen Oberflächeninspektion eines bewegten Körpers**

(71) Anmelder: ThyssenKrupp Nirosta GmbH, 47807 Krefeld (DE)
(72) Erfinder: Eberle, Arwed, Dipl.-Ing., 40223 Düsseldorf (DE); Missmahl, Wolf, Dipl.-Ing., 47877 Willich (DE)
(74) Vertreter: Cohausz & Florack

(57) **Zusammenfassung**

Die vorliegende Erfindung betrifft ein Verfahren zur automatischen Inspektion der Oberfläche eines in eine Förderrichtung bewegten Produkts (1,M), wie eines bewegten Bands (1,M). Das erfindungsgemäße Verfahren ermöglicht eine zeitnahe und sichere Auswertung der jeweils erfassten Fehler bei vermindertem datentechnischen Verarbeitungsaufwand. Dies wird dadurch erreicht, dass die folgenden Schritte durchlaufen werden:
(a) online erfolgendes Erfassen der Fehler der inspizierten Oberfläche des bewegten Produkts (1,M),
(b) online erfolgendes Klassifizieren der erfassten Fehler,
(c) Ablegen der den jeweiligen Fehlern zugeordneten Fehlerdaten in einem Speicher (S),
(d) Nachklassifizieren der für einen Flächenabschnitt (F₁-Fₑ) erfassten und klassifizierten Fehler basierend auf den im Speicher (S) abgelegten Fehlerdaten, während die Fehler des sich an den jeweiligen Flächenabschnitt (F₁-Fₑ-1) anschließenden Flächenabschnitts (F₂-Fₑ) der inspizierten Oberfläche kontinuierlich weiter online erfasst, klassifiziert und abgespeichert (Schritte (a) - (c)) werden.

## Beschreibung

Die vorliegende Erfindung betrifft ein Verfahren zur automatischen Oberflächeninspektion eines bewegten Körpers, wie eines bewegten Bands, bei dem die Oberfläche des bewegten Körpers online einer Fehlerdetektion unterzogen wird, bei dem die bei der Fehlerdetektion detektierten Fehler online einer ersten Klassifikation unterzogen werden, und bei dem die Fehler nach der ersten Klassifikation einer Nachklassifikation unterzogen werden.

Bei der Herstellung von Produkten, an deren optische Erscheinung im fertigen Zustand hohe Anforderungen gestellt werden, wird im Rahmen der betrieblichen Qualitätssicherung üblicherweise eine Prüfung der Oberflächenbeschaffenheit durchgeführt, bei der die vorhandenen Oberflächenfehler erfasst und bewertet werden. Ergibt diese Oberflächeninspektion eine zu große Anzahl oder Schwere der Fehler, so erfüllt das jeweilige Produkt die Anforderungen nicht und muss aussortiert werden.

Ein typischer Anwendungsbereich, in dem strenge Anforderungen an die Qualität der Oberfläche des Fertigprodukts gestellt werden, ist die Erzeugung von Stahlbändern, aus denen anschließend Gegenstände hergestellt werden, deren optische Wirkung insbesondere durch einen einwandfreien Zustand der Stahlflächen geprägt wird. Bei solchen Stahlbändern treten Oberflächenfehler typischerweise in Form von Kratzern, Oberflächenaufbrüchen, Oxidationen, oxidische Schlackenzeilen, Verschmutzungen oder vergleichbaren Defekten auf. Derartige Oberflächenfehler sind gerade bei Edelstahlbändern unerwünscht, wenn aus solchen Stahlbändern Gegenstände hergestellt werden sollen, deren Oberfläche im täglichen Gebrauch frei sichtbar ist.

Vergleichbar strenge Anforderungen werden an beschichtete Oberflächen gestellt, wenn diese eine bestimmte Porenfreiheit, Geschlossenheit, Struktur oder Ebenheit aufweisen müssen, um die von ihnen geforderte optische Erscheinung zu gewährleisten oder die ihnen zugeordnete technische Funktion zu erfüllen.

Die Kontrolle der Oberflächenqualität wird üblicherweise durch einen Mitarbeiter (Inspektor) durchgeführt, der persönlich das jeweilige Produkt in Augenschein nimmt und die auf der kritischen Oberfläche vorhandenen Fehler feststellt und bewertet. Im großtechnischen Produktionsprozess wird der Inspektor dabei durch automatisch arbeitende Inspektionssysteme unterstützt, die die vorhandenen Fehler erfassen, speichern und klassifizieren.

In der Praxis erweisen sich die auf diesem Wege von automatischen Inspektionssystemen gelieferten Fehlerdaten und Klassifikationen oftmals als zu ungenau, um daraus ein sicheres Urteil über die Qualität der Oberfläche des jeweiligen Produkts abzuleiten. Diese Ungenauigkeit der Klassifizierung folgt aus dem Umstand, dass sich zahlreiche Fehler in Form und Ausprägung zu wenig unterscheiden, um sicher und eindeutig von einem konventionell arbeitenden automatischen Inspektionssystem identifiziert zu werden.

Die Genauigkeit bei der Klassifikation der Fehler kann durch so genanntes "Kontextwissen" erhöht werden. Dieses Kontextwissen umfasst unterschiedliche Merkmale des jeweils erkannten Fehlers, wie charakteristische Fehlerverteilungen, Ausprägung, Fehlerkombinationen oder auch Fehlerlagen. So treten bestimmte Fehler erfahrungsgemäß in größerer Zahl, in bestimmter Kombination mit anderen Fehlern oder in bestimmten Oberflächenbereichen auf. Indem die zuvor vorgenommene Grundklassifizierung unter Anwendung des Kontextwissens überprüft und erforderlichenfalls korrigiert wird, kann die Genauigkeit des Klassifizierungsergebnisses deutlich verbessert werden.

Die Erfassung und Klassifikation von Oberflächenfehlern wird in der Regel "online", d.h. im Produktionsprozess durchgeführt, um zeitnahe Ergebnisse zu erhalten und um bei gehäuftem Auftreten bestimmter Fehler schnell in den Produktionsprozess eingreifen zu können.

Die "Nachklassifikation", d.h. die Überprüfung und Korrektur des Klassifikationsergebnisses, kann dagegen "offline", d.h. nach Erfassung aller Fehler und nach Beendigung des jeweiligen Produktionsschritts, während dessen die Fehler erfasst worden sind, durchgeführt werden. Bei der "offline" erfolgenden Nachklassifikation liegen alle Fehler- und Klassifikationsdaten vollständig vor. Es steht also zum Zeitpunkt des Starts der Nachklassifikation das durch die Fehlerdetektion und die Grundklassifikation der gesamten Oberfläche des bewegten Körpers erworbene Wissen zur Verfügung.

Dieses Wissen kann im Sinne eines sich selbst ergänzenden und erweiternden Wissensarchivs zur Erkennung von bestimmten Fehlertendenzen etc. genutzt werden. So können Häufigkeit und Position bestimmter Fehler als Entscheidungskriterium herangezogen werden, um die Genauigkeit der Bewertung des jeweiligen Fehlers zu stützen. In Kombination mit dem ohnehin vorhandenen Kontextwissen tragen diese Informationen zur Erhöhung der Genauigkeit des Ergebnisses der Nachklassifikation bei.

Nachteilig an der offline erfolgenden Nachklassifikation ist, dass dabei unter Umständen extrem große Datenmengen beherrscht werden müssen. Dies gilt insbesondere dann, wenn Oberflächenfehler eines mehre hundert Meter langen Stahlbands erfasst und aufbereitet werden sollen. Bei der offline erfolgenden Nachklassifikation treten daher insbesondere in der Anfangsphase Spitzenbelastungen der jeweils verwendeten Datenverarbeitungseinrichtung auf. Abhängig von deren Leistungsfähigkeit kann dies soweit gehen, dass es zu kritischen Systemzuständen bis hin zum Gesamtausfall des Systems kommt.

Ein weiterer Nachteil der offline erfolgenden Verarbeitung besteht darin, dass die Ergebnisse der Nachklassifikation erst nach vollständig erfolgter Inspektion der gesamten Oberfläche des bewegten Körpers, also nach vollständigem Durchlauf des Körpers durch die Inspektionseinrichtung, zur Verfügung stehen. Es besteht daher keine Möglichkeit, unter Berücksichtigung des Ergebnisses der Fehlererfassung, Klassifikation und Nachklassifikation in den Produktionsprozess mit dem Ziel einer Vermeidung des jeweiligen Fehlers einzugreifen.

Neben der offline durchgeführten Nachklassifikation kann die Nachklassifikation auch online, d.h. während des laufenden Produktionsprozesses, durchgeführt werden. In diesem Fall wird direkt nach der Detektion und ersten Klassifikation eines Fehlers die Nachklassifikation für den jeweiligen Fehler gestartet. Die Nachklassifikation erfolgt in diesem Fall also ereignisabhängig und wird während der gesamten Inspektionsdauer des bewegten Körpers für unterschiedliche Fehler ständig neu gestartet.

Auf diese Weise können im laufenden Produktionsprozess die Ergebnisse der Nachklassifikation genutzt werden, um prozessbedingte Fehler zu beseitigen. Dem steht als Nachteil gegenüber, dass bei einer solchen Online-Nachklassifikation als vom System erlerntes Kontextwissen nur das bereits vor dem Auftreten des jeweiligen Fehlers "online" entstandene Wissen genutzt werden kann. Informationen über die noch nicht untersuchten Oberflächenbereiche, insbesondere die in unmittelbarer Nachbarschaft des Fehlers auftretenden Fehlerereignisse, liegen zum Start der jeweiligen Nachklassifikation noch nicht vor mit der Folge, dass die Qualität des Nachklassifikationsergebnisses abnimmt. Besonders kritisch ist dieser Zustand zu Beginn des Inspektionsprozesses, wenn noch gar kein konkret auf das jeweilige Produkt bzw. die jeweilige Oberfläche bezogenes Kontextwissen vorhanden ist.

Ein anderer Nachteil der Online-Klassifikation besteht darin, dass beispielsweise bei lokal gehäuft auftretenden Fehlern innerhalb kurzer Zeit entsprechend viele Nachklassifikationen parallel erfolgen müssen. Um dies bewältigen zu können, muss innerhalb kurzer Zeit eine extrem hohe Rechnerleistung zur Verfügung stehen. Dies hat in der Praxis zur Folge, dass entweder bei entsprechend hohem Kostenaufwand für den Inspektions-, Klassifikations- und Nachklassifikationsprozess laufend hohe, die meiste Zeit jedoch nicht genutzte Rechnerleistung zur Verfügung gehalten oder in Kauf genommen werden muss, dass es bei Spitzenbelastungen in Folge von Fehlerhäufigkeiten zu kritischen Systemzuständen kommt.

Ausgehend von dem voranstehend erläuterten Stand der Technik lag der Erfindung zugrunde, ein Verfahren zur automatischen Erfassung und Bewertung von Oberflächenfehlern zu schaffen, das eine zeitnahe und sichere Auswertung der jeweils erfassten Fehler bei vermindertem datentechnischen Verarbeitungsaufwand ermöglicht.

Diese Aufgabe ist erfindungsgemäß durch ein Verfahren zur automatischen Inspektion der Oberfläche eines in eine Förderrichtung bewegten Produkts, wie eines bewegten Bands, gelöst worden, bei dem folgende Schritte durchlaufen werden:
(a) online erfolgendes Erfassen der Fehler der inspizierten Oberfläche des bewegten Produkts,
(b) online erfolgendes Klassifizieren der erfassten Fehler,
(c) Ablegen der den jeweiligen Fehlern zugeordneten Fehlerdaten in einem Speicher,
(d) Nachklassifizieren der für den jeweiligen Flächenabschnitt erfassten und klassifizierten Fehler basierend auf den im Speicher abgelegten Fehlerdaten, während die Fehler des sich an den jeweiligen Flächenabschnitt anschließenden Flächenabschnitts der inspizierten Oberfläche kontinuierlich weiter online erfasst, klassifiziert und abgespeichert (Schritte (a) - (c)) werden.

Dem erfindungsgemäßen Verfahren liegt der Gedanke zu Grunde, die hinsichtlich ihrer Fehler zu inspizierende Oberfläche virtuell in Flächenabschnitte zu unterteilen, in an sich bekannter Weise für jeden dieser Flächenabschnitte die Fehler online zu erfassen und zu klassifizieren, um dann, wenn die Erfassung und Klassifizierung der Fehler des betreffenden Flächenabschnitts abgeschlossen ist, erfindungsgemäß eine auf die Fehler des jeweiligen Abschnitts bezogene und den in einem Speicher abgelegten Ergebnissen der Fehlererfassung und ersten Klassifizierung basierende Nachklassifikation durchzuführen. Während des Ablaufs dieser Nachklassifikation werden in einem Prozessschritt, der sich kontinuierlich an die Erfassung und Klassifikation der Fehler des nun der Nachklassifikation unterworfenen Abschnitts anschließt, die Oberflächenfehler des nächstfolgenden Flächenabschnitts der zu inspizierenden Oberfläche erfasst und klassifiziert. Ist die Fehlererfassung und -klassifizierung für diesen Flächenabschnitt abgeschlossen, startet für ihn die Nachklassifikation, während gleichzeitig die Erfassung und Klassifizierung von Fehlern des nächstfolgenden Abschnitts erfolgt. Dieser Ablauf wird so lange fortgesetzt, bis alle Flächenabschnitte der zu inspizierenden Oberfläche abgearbeitet sind.

Gemäß der Erfindung werden die bei der Oberflächeninspektion ermittelten Fehler somit "quasi-online" nachklassifiziert. Die Ergebnisse dieser Nachklassifikation stehen noch während des laufenden Produktionsprozesses und zeitnah zur Erfassung des jeweiligen Fehlers zu Verfügung. Dies ermöglicht es, die Ergebnisse der Nachklassifikation unmittelbar in die Steuerung des gesamten Produktionsprozesses einzubeziehen, um so die jeweils erkannten Fehler im weiteren Ablauf der Produktion möglichst zu vermeiden. Da gleichzeitig die im Zuge der Nachklassifikation zu beherrschende Fehlerdatenmenge beschränkt ist, können sie mit deutlich geringem Aufwand und begrenzter Rechnerleistung verarbeitet werden, wie sie von konventionellen Datenverarbeitungseinrichtungen problemlos zur Verfügung gestellt werden. Die Größe der Flächenabschnitte, für die jeweils eine Nachklassifikation gestartet wird, kann dabei sicher an die Leistungsfähigkeit der Datenverarbeitungseinrichtung angepasst werden, so dass die Gefahr von kritischen Betriebszuständen ebenso sicher auch dann vermieden wird. Der für die Oberflächeninspektion insgesamt anfallende datenverarbeitungstechnische und kostenmäßige Aufwand kann auf diese Weise deutlich gegenüber der konventionellen Vorgehensweise vermindert werden.

Die Leistungsfähigkeit der für das erfindungsgemäße Verfahren jeweils eingesetzten Datenverarbeitungseinrichtung kann so ausgelegt werden, dass die Nachklassifikation für einen Flächenabschnitt abgeschlossen ist, bevor die Fehlererkennung und -klassifizierung für den nächstfolgenden Flächenabschnitt beendet ist. In diesem Fall ist nur eine einzige Rechnereinheit erforderlich, um für die gesamten Oberflächen eine vollständige Nachklassifikation durchzuführen. Alternativ ist es jedoch auch denkbar, zwei oder mehr Rechnereinheiten parallel zu betreiben, um für nacheinander fehlererfasste und -klassifizierte Flächenabschnitte parallel die Nachklassifizierung durchführen zu können. Dies kann insbesondere dann angezeigt sein, wenn die Größe der Flächenabschnitte oder die Fehlerhäufigkeit und -art dazu führt, dass die Nachklassifizierung des einen Flächenabschnitts noch nicht abgeschlossen ist, während die Erfassung und Klassifizierung der Fehler des folgenden Abschnitts schon beendet ist. In diesem Fall beginnt die zweite Rechnereinheit mit der Nachklassifizierung des zweiten Abschnitts während die erste die Nachklassifizierung des ersten Abschnitts abschließt, um dann für die Nachklassifizierung der Fehler des dritten Abschnitts zur Verfügung zu stehen, und so fort.

Der besondere Vorteil der erfindungsgemäßen Vorgehensweise besteht darin, dass trotz des deutlich verminderten Rechenaufwands das im Zuge der Nachklassifikation jeweils gewonnene Kontextwissen für alle folgenden Nachklassifikationen zur Verfügung steht. Auf diese Weise entsteht auch bei einer erfindungsgemäß durchgeführten Oberflächeninspektion ein Erfahrungsschatz, der es ermöglicht, beispielsweise Fehlertendenzen zu erkennen, Informationen über das Umfeld eines Fehlers für die Zuordnung und Bewertung des betreffenden Fehlers zu nutzen und laufend Unterscheidungskriterien zu entwickeln und weiterzubilden, durch die schon nach kurzer Betriebszeit maximale Erkennungsleistungen gesichert sind.

Ein weiterer Vorteil der Erfindung besteht darin, dass die für sie erforderlichen Fehlerdaten in konventioneller Weise zusammengestellt werden können. So können beispielsweise optisch arbeitende Bilderfassungssysteme für die Erfassung der Fehler und ebenso konventionelle Verfahren für die Klassifizierung der erfassten Fehler verwendet werden.

Das erfindungsgemäße Verfahren eignet sich besonders zur Inspektion der Oberfläche von Bändern, insbesondere Metallbändern, wie warm- oder kaltgewalzten Stahlbändern, insbesondere Edelstahlbändern. Solche Bänder werden in großen Längen zu Coils gewickelt und müssen in der Regel über ihre gesamte Länge hinsichtlich möglicher Oberflächenfehler überprüft und bewertet werden. Gerade bei der Inspektion von derart langen Bändern wirkt sich die erfindungsgemäße Vorgehensweise besonders günstig aus, da es mit ihr möglich ist, die andernfalls bei der Nachklassifikation unvermeidbar großen Datenmengen auf eine handhabbare Größe zu reduzieren und dennoch eine quasi-online erfolgende Nachbearbeitung der Fehlerdaten vorzunehmen.

Liegt der Schwerpunkt der Nachklassifikation in der frühzeitigen Erkennung von systematisch wiederkehrenden Oberflächenfehlern und ihren Ursachen, so können dazu die Flächensegmente, für die jeweils eine Nachklassifikation vorgenommen wird, möglichst klein gewählt werden. Auf diese Weise kann die Menge der bei der Nachklassifikation zu verarbeitenden Fehlerdaten klein gehalten werden.

Soll dagegen ein besonders sicheres Ergebnis der Nachklassifikation unter bestmöglicher Ausnutzung des im Zuge der Nachklassifikation selbst erlernten Kontextwissens erzielt werden, so ist die Einteilung der zu inspizierenden Oberfläche in größere Flächenabschnitte vorteilhaft. Tritt innerhalb eines solch großen Flächensegments ein Fehler mit einer bestimmten Häufigkeit auf, so stellt dies ein eindeutiges Indiz für die Oberflächenqualität des gesamten inspizierten Produkts dar. So kann beispielsweise dann, wenn ein Fehler innerhalb des jeweiligen Flächenabschnitts häufiger als eine zulässige Maximalhäufigkeit auftritt, das jeweils inspizierte Produkt insgesamt einer Qualitätsstufe zugeordnet werden, für die der betreffende Fehler repräsentativ ist. Tritt beispielsweise innerhalb eines bestimmten Flächenabschnitts ein bestimmter, der untersten Qualitätsstufe zugeordneter Oberflächenfehler häufiger als zehnmal auf, so wird das gesamte Band oder mindestens der jeweilige Flächenabschnitt der betreffenden Qualitätsstufe zugeordnet.

Eine weitere vorteilhafte Ausgestaltung der Erfindung ist dadurch gekennzeichnet, dass für jeden Fehler eine separate Nachklassifizierung vorgenommen wird. Die erfindungsgemäße Einteilung der zu inspizierenden Oberfläche in Flächenabschnitte, für die dann jeweils die auf den betreffenden Fehler bezogene Nachklassifikation durchgeführt wird, erfolgt dabei, wenn möglich, für jeden Fehler gesondert. Dabei wird im Hinblick auf eine möglichst ökonomische Durchführung vorteilhafterweise vor dem Start einer Nachklassifikation jeweils entschieden, ob diese Nachklassifikation tatsächlich durchgeführt werden soll. Die Entscheidung, für oder gegen die Durchführung der Nachklassifikation kann dabei beispielsweise in Abhängigkeit von der Schwere und der Bedeutung des jeweiligen Fehlers für die Qualität des jeweils inspizierten Produkts gefällt werden. Schwere und / oder Bedeutung des jeweiligen Fehlers können als separate Bewertungskriterien in einem Speicher abgelegt sein.

Bestehen bereits Vorstellungen über die beispielsweise in Folge bestimmter Verarbeitungsschritte zu erwartende Beschaffenheit der inspizierenden Oberfläche, die erwartete Fehlerart oder Fehlerhäufigkeit, so kann die Größe der Flächenabschnitte, für die jeweils eine Nachklassifikation durchgeführt wird, unter Berücksichtigung der erwarteten Fehlerdatenmenge bemessen werden.

Für eine optimierte Auslegung des Gesamtsystems kann es jedoch auch zweckmäßig sein, wenn alle Flächenabschnitte, bei deren Erreichen deren Grenze jeweils eine Nachklassifikation (Schritt (d) des erfindungsgemäßen Verfahrens) durchgeführt wird, dieselbe Größe aufweisen. Handelt es sich bei dem inspizierten Produkt um ein Band, so kann dazu dieses Band in Flächenabschnitte mit derselben in Förderrichtung des Körpers gemessenen Länge unterteilt werden. Die Vorgabe einer konstanten Abschnittslänge führt zwangsläufig dazu, dass der jeweils letzte Abschnitt eines Bandes kürzer ist als die übrigen Abschnitte. Diese Abweichung ist normalerweise ohne Auswirkung auf die Nachklassifikationsleistung. Um sicherzustellen, dass auch das jeweils letzte, bzw. das einem Rand der zu inspizierenden Oberfläche zugeordnete, Flächensegment eine für die Bewertung der Oberflächenqualität ausreichende Größe hat, kann es jedoch sinnvoll sein, die Körperoberfläche in äquidistante Segmente einzuteilen. Beispielsweise bei einer Segmentierung der Körperoberfläche durch quer zur Bewegungsrichtung verlaufende virtuelle Grenzlinien sollte die Länge der äquidistanten Segmente dem zu der für eine zuverlässige Fehlerklassifikation minimal erforderlichen Segmentlänge nächstgrößeren Wert entsprechen. Handelt es sich bei dem zu inspizierenden Produkt um ein Band, so kann für die in Förderrichtung gemessene Längenausdehnung der erfindungsgemäß für die Nachklassifikation jeweils vorgesehenen Flächenabschnitte beispielhaft ein Bereich von 1 m bis 500 m angegeben werden. Bei einer solchen Länge ist eine zuverlässige Nachklassifikation einerseits und eine kurzfristig mögliche Einleitung von prozesssteuernden Maßnahmen andererseits gewährleistet.

Eine Überlastung der zur Durchführung der erfindungsgemäßen Nachklassifikation eingesetzten Datenverarbeitungseinrichtung kann dadurch vermieden werden, dass als Signal für das Erreichen der Grenze eines Flächenabschnitts und den Beginn der Nachklassifikation das Erreichen einer für den jeweiligen Flächenabschnitt gesammelten, maximalen Fehlerdatenmenge gewertet wird.

Gemäß einer weiteren vorteilhaften Ausgestaltung der Erfindung beträgt die quer zur Förderrichtung des Körpers gemessene Breite der Flächenabschnitte jeweils einen Bruchteil der Breite der zu inspizierenden Oberfläche. Bei dieser Ausgestaltung erstrecken sich die Flächenabschnitte, für die die Nachklassifikation durchgeführt wird, jeweils nur über einen Bruchteil der Breite der zu inspizierenden Oberfläche. Dazu können die Flächenabschnitte beispielsweise durch im Wesentlichen quer zur Förderrichtung verlaufende virtuelle Grenzlinien begrenzt sein. Als beispielhaft für die Einteilung eines Stahlbandes in ihrer Breite längs der Förderrichtung begrenzte Oberflächensegmente kann eine Ausdehnung quer zur Bewegungsrichtung des bewegten Körpers von 10 mm bis 500 mm angegeben werden. Durch Wahl eines solchen Breitenbereichs werden eine zuverlässige Nachklassifikation einerseits und eine kurzfristig mögliche Einleitung von prozesssteuernden Maßnahmen andererseits erreicht.

Die Festlegung der jeweils optimalen Breite der Flächenabschnitte kann wiederum nach der Maßgabe erfolgen, dass eine bestimmte Fehleranzahl in mindestens einem Flächenabschnitt bei jedem auf die niedrigste Qualitätsstufe abgewerteten Produkt auftreten sollte. Manche Fehler, wie im Fall der Inspektion von Stahlbändern, zum Beispiel typische Randfehler, treten nur in bestimmten Breitenabschnitten auf. Bei der Nachklassifikation dieser Fehler kann Systemleistung gespart werden, wenn von vornherein nur für die erfahrungsgemäß betroffenen Bereiche die erfindungsgemäße Nachklassifikation angewendet wird.

Nachfolgend wird die Erfindung anhand einer ein Ausführungsbeispiel darstellenden Zeichnung erläutert. Es zeigen schematisch:
- Fig. 1: eine Vorrichtung zum Inspizieren der Oberfläche eines Stahlbands in Draufsicht;
- Fig. 2a-2d: schematische Darstellungen des zeitlichen Ablaufs einer gemäß dem erfindungsgemäßen Verfahren durchgeführten Oberflächeninspektion.

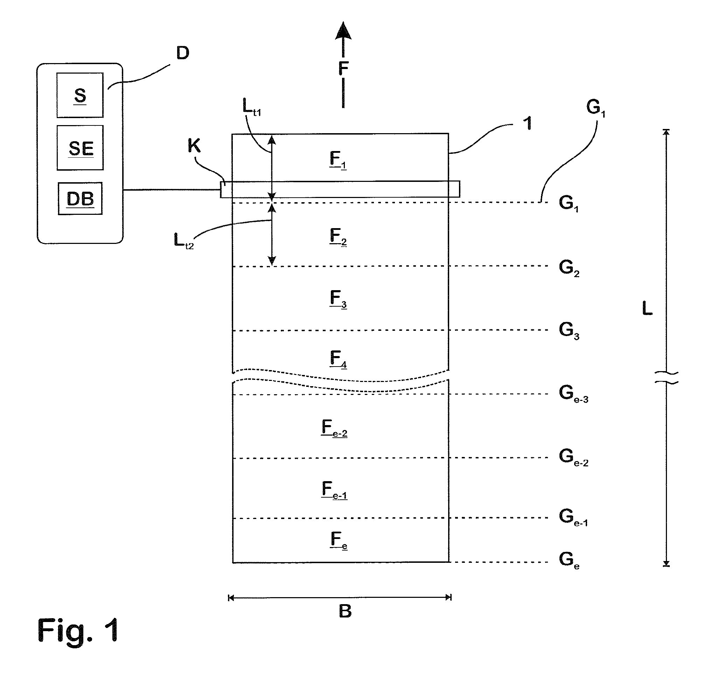

In Fig. 1 durchläuft ein kaltgewalztes, aus einem nicht rostenden Edelstahl hergestelltes Stahlband 1 mit einer Breite B von beispielsweise 2000 mm und einer Länge L in Förderrichtung F eine Inspektionseinrichtung K.

Die Inspektionseinrichtung K umfasst eine weiter nicht dargestellte Bilderfassungseinrichtung, beispielsweise eine Zeilenkamera, die ein Abbild des von ihr jeweils erfassten Ausschnitts des Stahlbands 1 als digitalen Datensatz an eine Datenverarbeitungseinrichtung D liefert.

Die von der Inspektionseinrichtung K gelieferten Bilddaten werden in der Datenverarbeitungseinrichtung D online, d.h. mit ihrem Eintreffen, nach möglichen Fehlern auf der Oberfläche des Metallbands 1 in an sich bekannter Weise ausgewertet. Die dabei erkannten Fehler werden ebenso online einer ersten Klassifikation unterzogen, bei der sie beispielsweise einer bestimmten Fehlerart oder Qualitätsstufe zugeordnet werden.

Die so erhaltenen Fehlerdaten werden in einem Speicher S der Datenverarbeitungseinrichtung D abgelegt, bis das Metallband 1 über eine Teillänge Lₜ₁ die Inspektionseinrichtung K passiert hat. Die Teillänge Lₜ₁ entspricht dabei der in Förderrichtung F gemessenen Länge eines ersten sich über die Breite B des Metallbands 1 erstreckenden virtuellen Flächenabschnitts F₁, der virtuell durch eine quer zur Förderrichtung F sich erstreckende, in Fig. 1 gestrichelt dargestellte Grenzlinie G₁ vom nächstfolgenden, unmittelbar an den virtuellen Flächenabschnitt F₁ angrenzenden virtuellen Flächenabschnitt F₂ getrennt ist.

Das Passieren der Inspektionseinrichtung K durch die virtuelle Grenzlinie G₁ des Flächenabschnitts F₁ löst in der Datenverarbeitungseinrichtung D den Beginn der Nachklassifikation der im Speicher S gespeicherten, dem Flächenabschnitt F₁ zugeordneten Fehlerdaten aus. Im Zuge dieser Nachklassifikation werden die durch die betreffenden Fehlerdaten repräsentierten Fehler und ihre im Zuge der ersten Klassifizierung erfolgte Einstufung unter Berücksichtigung von Kontextwissen überprüft, das beispielsweise aus einer ebenfalls in der Datenverarbeitungseinrichtung D gespeicherten Datenbank DB abgerufen wird. Die Ergebnisse der Nachklassifizierung werden in einem zweiten Datenspeicher SE der Datenverarbeitungseinrichtung D abgespeichert, aus dem nach Durchlauf des gesamten Stahlbands 1 durch die Inspektionseinrichtung K und abgeschlossener Nachklassifizierung der für den letzten virtuellen Flächenabschnitt Fe ein Protokoll auslesbar ist, das Auskunft über die Position der verschiedenen Fehler, ihre Art, ihre Häufigkeit etc. und die daraus folgende Qualitätseinstufung des Metallbands 1 gibt.

Während der Nachklassifikation der für den virtuellen Flächenabschnitt F1 erfassten Fehler wird das Metallband 1 unverändert weiter in Förderrichtung F unter der Inspektionseinrichtung K her gefördert. Die Inspektionseinrichtung K erfasst dabei ohne Unterbrechung die Oberfläche des Metallbands 1 im auf den Flächenabschnitt F₁ folgenden Flächenabschnitt F₂ und liefert auch die den Flächenabschnitt F₂ betreffenden Bilddaten an die Datenverarbeitungseinrichtung D. Dort werden die für den Flächenabschnitt F₂ erstellten Bilddaten in einem parallel zur Nachklassifizierung der Fehler des Flächenabschnitts F₁ ablaufenden Prozess hinsichtlich möglicher Fehler ausgewertet, die so ermittelten Fehler wiederum einer ersten Klassifizierung unterzogen und die dabei erstellten Fehlerdaten im Speicher S abgelegt.

Nach einer Teillänge Lₜ₂ trifft bei der Inspektionseinrichtung K die virtuelle Grenze G₂ ein, an der der virtuelle Flächenabschnitt F₂ an den nächstfolgenden virtuellen Flächenabschnitt F₃ des Metallbands 1 grenzt. Das Erreichen der Inspektionseinrichtung K durch die Grenze G₂ veranlasst die Datenverarbeitungseinrichtung D wiederum die Nachklassifizierung der für den Flächenabschnitt F₂ erfassten Fehler zu starten. Gleichzeitig beginnt die Inspektionseinrichtung K die Oberfläche des sich an den Flächenabschnitt F₂ anschließenden virtuellen Flächenabschnitts F₃ zu erfassen und entsprechende Bilddatensätze an die Datenverarbeitungseinrichtung D zu senden.

In der Datenverarbeitungseinrichtung D läuft nun die Nachklassifizierung der dem virtuellen Flächenabschnitt F₂ zugeordneten Fehler parallel zur Erfassung und ersten Klassifizierung der Oberflächenfehler des virtuellen Flächenabschnitts F₃ in der für die virtuellen Flächenabschnitte F₁ und F₂ voranstehend beschriebenen Weise parallel ab. Zu diesem Zeitpunkt ist die Nachklassifizierung der dem virtuellen Flächenabschnitt F₁ zugeordneten Fehler bereits abgeschlossen, so dass in der Datenverarbeitungseinrichtung jeweils nur zwei Prozesse ablaufen, nämlich die Nachklassifizierung des hinsichtlich der Fehlererfassung und ersten Klassifizierung abgeschlossenen Flächenabschnitts und die Erfassung und erste Klassifizierung des jeweils aktuell durch die Inspektionseinrichtung K laufenden virtuellen Flächenabschnitts. Diese Prozesse werden fortlaufend fortgesetzt, bis der letzte der virtuellen Flächenabschnitte Fₑ durch die Inspektionseinrichtung K gelaufen ist und die für ihn erfassten Fehler fertig nachklassifiziert sind.

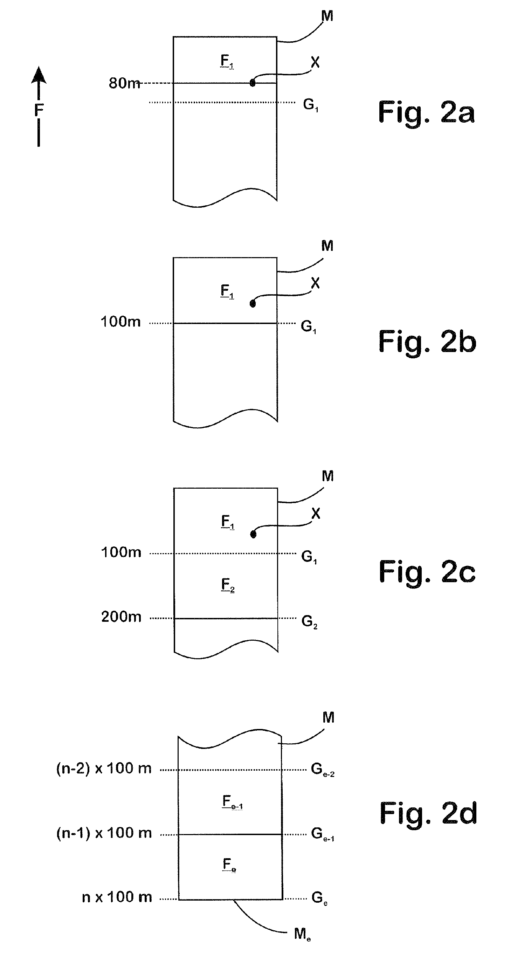

Die Figuren 2a bis 2d geben in idealisierter Form den zeitlichen Ablauf des erfindungsgemäßen Verfahrens und die sich daraus ergebenden Ergebnisse wieder:

Bei der Inspektion der Oberfläche eines kaltgewalzten Edelstahlbands M werden beginnend mit dem Bandanfang A in der im Zusammenhang mit Fig. 1 beschriebenen Weise die Oberflächenfehler eines ersten virtuellen, 100 Meter langen Flächenabschnitts F₁ erfasst und ein erstes Mal klassifiziert. Dabei wird nach einer Länge von 80 Metern beispielsweise ein Fehler X festgestellt, der bei der ersten Klassifikation dem Typ "B" zugeordnet wird.

Nachdem nach weiteren 20 Metern die virtuelle Grenze G₁ des virtuellen Flächenabschnitts F₁ erreicht ist, beginnt die Nachklassifikation. Unter Berücksichtigung des im Zuge dieser Nachklassifikation herangezogenen Kontextwissens ergibt sich, dass der Fehler X richtigerweise dem Typ "A" zugeordnet werden muss. Die im Speicher der jeweiligen Datenverarbeitungseinrichtung gespeicherten Daten zum Fehler X werden dementsprechend korrigiert.

Während der Nachklassifikation der für den virtuellen Flächenabschnitt F₁ erfassten Fehler werden in einem kontinuierlich weiterlaufenden Prozess die Fehler des sich an den Flächenabschnitt F₁ unmittelbar anschließenden virtuellen Flächenabschnitts F₂ erfasst und der ersten Klassifizierung unterworfen. Ist nach weiteren 100 Metern die Grenze des Flächenabschnitts F₂ zum nächstfolgenden Flächenabschnitt F₃ erreicht, beginnt die Nachklassifikation der für den Flächenabschnitt F₂ erfassten Fehler, während die im Bereich des Flächenabschnitts F₃ vorhandenen Fehler erfasst und der ersten Klassifikation unterzogen werden.

Die kontinuierlich aufeinander folgende Erfassung der Fehler der einzelnen virtuellen Flächenabschnitte F₁ bis Fₑ des Edelstahlbands M und die mit dem Erreichen jeder Grenze G₁ bis Gₑ₋₁ zwischen den virtuellen Flächenabschnitten F₁ bis Fₑ diskontinuierlich für den jeweils zuvor erfassten und erstmals klassifizierten Flächenabschnitt einsetzende Nachklassifikation werden fortgesetzt, bis das Ende Mₑ des Edelstahlbands erreicht und auch für den mit dem Ende Mₑ abschließenden letzten virtuellen Flächenabschnitt Fₑ die Nachklassifikation abgeschlossen ist.

Im Ergebnis wird auf diese Weise ein hochgenaues Abbild der Verteilung, Art und Einstufung der auf der Oberfläche des Edelstahlbands M vorhandenen Fehler erhalten, das eine ebenso sichere Einstufung der Qualität dieses Edelstahlbands M erlaubt.

### BEZUGSZEICHEN

- 1, M: Stahlband
- B: Breite des Stahlbands 1
- D: Datenverarbeitungseinrichtung
- DB: in der Datenverarbeitungseinrichtung D gespeicherte Datenbank
- F: Förderrichtung
- F₁ - Fₑ: Flächenabschnitte
- G₁ - Gₑ₋₁: Grenzlinien zwischen den Flächenabschnitten F₁ - Fₑ
- K: Inspektionseinrichtung
- L: Länge des Stahlbands 1
- Lₜ₁,Lₜ₂: Teillängen des Stahlbands 1
- Mₑ: Ende des Metallbands M
- S: Speicher der Datenverarbeitungseinrichtung D
- SE: zweiter Datenspeicher der Datenverarbeitungseinrichtung D
- X: Fehler

## Patentansprüche

1. Verfahren zur automatischen Inspektion der Oberfläche eines in eine Förderrichtung bewegten Produkts (1,M), wie eines bewegten Bands (1,M), umfassend die folgenden Schritte:
(a) online erfolgendes Erfassen der Fehler der inspizierten Oberfläche des bewegten Produkts (1,M),
(b) online erfolgendes Klassifizieren der erfassten Fehler,
(c) Ablegen der den jeweiligen Fehlern zugeordneten Fehlerdaten in einem Speicher (S),
(d) Nachklassifizieren der für einen Flächenabschnitt (F₁-Fₑ) erfassten und klassifizierten Fehler basierend auf den im Speicher (S) abgelegten Fehlerdaten, während die Fehler des sich an den jeweiligen Flächenabschnitt (F₁-Fₑ₋₁) anschließenden Flächenabschnitts (F₂-Fₑ) der inspizierten Oberfläche kontinuierlich weiter online erfasst, klassifiziert und abgespeichert (Schritte (a) - (c)) werden.

2. Verfahren nach einem der voranstehenden Ansprüche, **dadurch gekennzeichnet, dass** das bewegte Produkt ein Stahlband (1,M) ist.

3. Verfahren nach einem der voranstehenden Ansprüche, **dadurch gekennzeichnet, dass** alle Flächenabschnitte (F₁-Fₑ), bei deren Erreichen deren Grenze (G₁-Gₑ) jeweils eine Nachklassifikation (Schritt (d)) durchgeführt wird, dieselbe Größe aufweisen.

4. Verfahren nach einem der voranstehenden Ansprüche, **dadurch gekennzeichnet, dass** alle Flächenabschnitte (F₁-Fₑ) dieselbe in Förderrichtung des Produkts (1,M) gemessene Länge (Lₜ₁,Lₜ₂) besitzen.

5. Verfahren nach Anspruch 1 oder 2, **dadurch gekennzeichnet, dass** die Größe der Flächenabschnitte (F₁-Fₑ) entsprechend der erwarteten Fehlerart und / oder Fehlerhäufigkeit bemessen wird.

6. Verfahren nach einem der Ansprüche 1 oder 2, **dadurch gekennzeichnet, dass** als Signal für das Erreichen der Grenze (G₁-Gₑ₋₁) eines Flächenabschnitts (F₁-Fₑ) und den Beginn der Nachklassifikation das Erreichen einer für den jeweiligen Flächenabschnitt (F₁-Fₑ) gesammelten, maximalen Fehlerdatenmenge gewertet wird.

7. Verfahren nach einem der voranstehenden Ansprüche, **dadurch gekennzeichnet, dass** die quer zur Förderrichtung (F) des Produkts (1,M) gemessene Breite der Flächenabschnitte (F₁-Fₑ) jeweils einen Bruchteil der Breite (B) der zu inspizierenden Oberfläche beträgt.

8. Verfahren nach einem der voranstehenden Ansprüche, **dadurch gekennzeichnet, dass** die Flächenabschnitte (F₁-Fₑ) durch im Wesentlichen quer zur Förderrichtung (F) des bewegten Produkts (1) verlaufende virtuelle Grenzen (G₁-Gₑ) begrenzt werden.

9. Verfahren nach einem der voranstehenden Ansprüche, **dadurch gekennzeichnet, dass** für jeden Fehlertyp eine separate Nachklassifikation durchgeführt wird.

10. Verfahren nach Anspruch 9, **dadurch gekennzeichnet, dass** bei der Entscheidung, für den jeweiligen Fehlertyp eine Nachklassifikation durchzuführen, die Schwere des Fehlers berücksichtigt wird.

11. Verfahren nach Anspruch 9 oder 10, **dadurch gekennzeichnet, dass** für jede Nachklassifikation eine gesonderte Einteilung der Oberfläche in Flächenabschnitte (F₁-Fₑ) vorgenommen wird.
